(19) Europäisches Patentamt
European Patent Office
Office européen des brevets

(11) **EP 2 532 070 B1**

(12) **FASCICULE DE BREVET EUROPEEN**

(45) Date de publication et mention
de la délivrance du brevet:
**03.09.2014 Bulletin 2014/36**

(21) Numéro de dépôt: **11702634.4**

(22) Date de dépôt: **04.02.2011**

(51) Int Cl.:
***B60L 3/00*** *(2006.01)*     ***B60L 11/18*** *(2006.01)*
***H01G 9/00*** *(2006.01)*     ***H01M 10/0525*** *(2010.01)*
***H01M 10/42*** *(2006.01)*     ***H01M 10/44*** *(2006.01)*
***H01M 10/46*** *(2006.01)*     ***H02J 7/00*** *(2006.01)*

(86) Numéro de dépôt international:
**PCT/EP2011/051684**

(87) Numéro de publication internationale:
**WO 2011/095606 (11.08.2011 Gazette 2011/32)**

(54) **SYSTEME D'EQUILIBRAGE POUR BATTERIES D'ACCUMULATEURS**

AUSGLEICHSSYSTEM FÜR AKKUMULATOREN

EQUALIZATION SYSTEM FOR ACCUMULATOR BATTERIES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.02.2010 FR 1000481**

(43) Date de publication de la demande:
**12.12.2012 Bulletin 2012/50**

(73) Titulaire: **Commissariat à l'Énergie Atomique et aux Énergies Alternatives
75015 Paris (FR)**

(72) Inventeurs:
• **MERCIER, Sylvain**
**F-38120 Saint Egreve (FR)**
• **CHATROUX, Daniel**
**F-38470 Teche (FR)**
• **DAUCHY, Julien**
**F-38160 Chatte (FR)**
• **FERNANDEZ, Eric**
**F-38760 Saint Paul De Varces (FR)**

(74) Mandataire: **Sogan, Gloria et al
Innovincia
310 avenue Berthelot
69008 Lyon (FR)**

(56) Documents cités:
**US-A- 5 003 244**     **US-A1- 2008 106 239**
**US-A1- 2008 116 850**     **US-A1- 2009 278 496**

**Description**

L'invention concerne un système d'équilibrage pour batteries d'accumulateurs électrochimiques, pouvant être utilisées notamment dans le domaine des transports électriques, hybrides et les systèmes embarqués. L'invention concerne en particulier les batteries de type lithium-ion (Li-ion) bien adaptées pour ce genre d'applications, du fait de leur possibilité de stocker une forte énergie avec une faible masse. L'invention est également applicable aux super-condensateurs.

Un accumulateur électrochimique a une tension nominale de l'ordre de quelques volts, et plus précisément 3.3 V pour les batteries Li-ion à base de phosphate de fer et 4.2 V pour une technologie Li-ion à base d'oxyde de cobalt. Si cette tension est trop faible par rapport aux exigences du système à alimenter, plusieurs accumulateurs sont placés en série. Il est également possible de disposer en parallèle de chaque accumulateur associé en série, un ou des accumulateurs en parallèle afin d'augmenter la capacité disponible et de fournir un courant et une puissance supérieurs. Les accumulateurs associés en parallèle forment ainsi un étage. Un étage est constitué au minimum d'un accumulateur. Les étages sont mis en série pour atteindre le niveau de tension désiré. L'association des accumulateurs est appelée une batterie d'accumulateurs.

La charge ou décharge d'un accumulateur se traduit respectivement par une croissance ou décroissance de la tension à ses bornes. On considère un accumulateur chargé ou déchargé lorsque celui-ci a atteint un niveau de tension défini par le processus électrochimique. Dans un circuit utilisant plusieurs étages d'accumulateur(s), le courant circulant à travers,les étages est le même. Le niveau de charge ou de décharge des étages dépend donc des caractéristiques intrinsèques des accumulateurs, à savoir la capacité intrinsèque et les résistances internes parasites séries et parallèles, de l'électrolyte ou de contact entre les électrodes et l'électrolyte. Des différences de tension entre les étages sont dès lors possibles du fait des disparités de fabrication et de vieillissement.

Pour un accumulateur de technologie Li-ion, une tension trop élevée ou trop faible, dite tension de seuil, peut endommager ou détruire ce dernier. Pour exemple, la surcharge d'un accumulateur Li-ion à base d'oxyde de cobalt, peut entraîner son emballement thermique et un départ de feu. Pour un accumulateur Li-ion à base de phosphate de fer, une surcharge se traduit par une décomposition de l'électrolyte qui diminue sa durée de vie ou peut détériorer l'accumulateur. Une décharge trop importante qui amène à une tension inférieure à 2 V, par exemple, entraîne principalement une oxydation du collecteur de courant de l'électrode négative lorsque celui-ci est en cuivre et donc une détérioration de l'accumulateur. En conséquence, la surveillance des tensions aux bornes de chaque étage d'accumulateur(s) est obligatoire lors de la charge et décharge pour une question de sécurité et de fiabilité. Un dispositif dit de surveillance en parallèle de chaque étage permet d'assurer cette fonction.

Le dispositif de surveillance a pour fonction de suivre l'état de charge et décharge de chaque étage d'accumulateur(s) et de transmettre infirmation au circuit de contrôle afin d'arrêter la charge ou la décharge de la batterie lorsqu'un étage a atteint sa tension de seuil. Cependant, sur une batterie avec plusieurs étages d'accumulateur(s) disposés en série, si la charge est arrêtée lorsque l'étage le plus chargé atteint sa tension de seuil, les autres étages peuvent ne pas être totalement chargés. Inversement, si la décharge est arrêtée lorsque l'étage le plus déchargé atteint sa tension de seuil, les autres étages peuvent ne pas être totalement déchargés. La charge de chaque étage d'accumulateur(s) n'est dès lors pas exploitée de façon optimale, ce qui représente un problème majeur dans des applications de types transports et embarqués ayant de fortes contraintes d'autonomie. Pour pallier ce problème, le dispositif de surveillance est généralement associé à un dispositif d'équilibrage.

Le dispositif d'équilibrage a pour fonction d'optimiser la charge de la batterie et donc son autonomie en amenant les étages d'accumulateur(s) mis en série à un état de charge et/ou décharge identique. Le document US 2008/116850 A1 décrit un système d'équilibrage de charge pour batterie. Il existe deux catégories de dispositifs d'équilibrage, les dispositifs d'équilibrage dits à dissipation d'énergie, ou dits à transfert d'énergie.

Avec les dispositifs d'équilibrage à dissipation d'énergie, la tension aux bornes des étages est uniformisée en détournant le courant de charge d'un ou des étages ayant atteint la tension de seuil. En variante, la tension aux bornes des étages est uniformisée en déchargeant un ou des étages ayant atteint la tension de seuil. Cependant de tels dispositifs d'équilibrage à dissipation d'énergie présentent l'inconvénient majeur de consommer plus d'énergie que nécessaire pour charger la batterie. En effet, on doit décharger plusieurs accumulateurs ou dériver le courant de charge de plusieurs accumulateurs pour que le ou les derniers accumulateurs un peu moins chargés terminent leur charge. L'énergie dissipée peut donc être très supérieure à l'énergie de ou des charges devant être terminées. De plus, ils dissipent l'énergie excédentaire en chaleur, ce qui n'est pas compatible avec les contraintes d'intégration dans les applications de types transport et embarqués, et le fait que la durée de vie des accumulateurs baisse fortement lorsque la température s'élève.

Les dispositifs d'équilibrage à transfert d'énergie eux échangent de l'énergie entre la batterie d'accumulateurs ou un réseau auxiliaire d'énergie et les étages d'accumulateur(s).

On connaît par exemple du brevet US5659237 un dispositif permettant le transfert d'énergie d'un réseau auxiliaire à des étages par une structure « flyback » avec plusieurs sorties et utilisant une inductance couplée comme élément de stockage. Ce dernier est un composant spécifique car dédié à cette application. Par conséquent, le coût d'un tel composant est prohibitif par rapport à la fonction à remplir.

On connaît par ailleurs du brevet CN1905259 un dispositif permettant le transfert d'énergie des étages à la batterie et utilisant quant à lui une inductance par accumulateur comme élément de stockage. Cependant, ce dispositif n'opte pas pour un transfert d'énergie optimisé pour l'équilibrage des batteries dans les applications de types transports et embarqués. En effet, la fin de charge d'une batterie est déterminée par le dernier étage qui atteint la tension de seuil. Pour terminer la charge d'une batterie, l'énergie est prélevée sur un ou plusieurs étages et elle est restituée à l'ensemble des étages. Lorsqu'un ou plusieurs étages d'accumulateur(s) sont un peu moins chargés, l'énergie n'est dès lors pas transférée en priorité à ce ou ces derniers qui en a ou ont besoin mais également à ou aux étages auxquels l'énergie est prélevée. L'équilibrage nécessite donc de prélever de l'énergie à l'ensemble des étages en fin de charge afin d'éviter de les charger à une tension trop élevée. L'équilibrage se fait donc à pertes élevées à cause du nombre de convertisseurs importants en fonctionnement De plus, les accumulateurs déjà en fin de charge sont traversés par des composantes de courant alternatives ou continues non utiles.

L'invention a donc pour objectif de proposer une système d'équilibrage de charge amélioré ne présentant pas ces inconvénients de l'état de l'art de la technique.

À cet effet, l'invention a pour objet un système d'équilibrage de charge pour batterie comprenant au moins deux étages d'accumulateurs mis en série, chaque étage comprenant un accumulateur ou au moins deux accumulateurs connectés en parallèle, caractérisé en ce que ledit système comporte :

- pour chaque étage d'accumulateurs un dispositif de charge associé comprenant :

  • au moins une inductance pour emmagasiner de l'énergie,
  • au moins une première et au moins une seconde diodes, telles que ladite première diode soit reliée au pôle négatif dudit étage d'accumulateur par son anode et par sa cathode à l'une des deux extrémités de l'inductance, et ladite seconde diode soit reliée au pôle positif dudit étage d'accumulateur par sa cathode et à l'autre extrémité de l'inductance par son anode,
  • au moins un premier et au moins un deuxième interrupteurs commandés, tels que ledit premier interrupteur soit relié au pôle négatif de la batterie et à l'anode de la seconde diode, et que ledit deuxième interrupteur commandé soit relié au pôle positif de la batterie et à la cathode de la première diode, et en ce que ledit système comporte en outre

- un dispositif de commande desdits dispositifs de charge, configuré pour fermer lesdits interrupteurs d'un dispositif de charge associé à un étage d'accumulateurs à charger de façon à ce que ladite au moins une inductance emmagasine de l'énergie et pour ouvrir lesdits interrupteurs commandés de façon à transférer l'énergie à l'étage d'accumulateurs associé.

Ledit système d'équilibrage peut en outre comporter une ou plusieurs caractéristiques suivantes, prises séparément ou en combinaison :

- le dispositif de commande est configuré pour fermer simultanément lesdits premier et deuxième interrupteurs commandés d'un même dispositif de charge à charger,
- le dispositif de commande est configuré pour ouvrir lesdits interrupteurs commandés au bout d'un temps de conduction prédéfini,
- ledit dispositif de charge est configuré pour fonctionner en conduction discontinue, indépendamment des niveaux de tensions de l'étage d'accumulateurs associé et de la batterie pendant une phase de charge,
- le temps de conduction prédéfini est calculé de sorte que le dispositif de charge pour chaque étage d'accumulateur fonctionne en conduction discontinue,
- le dispositif de commande est configuré pour fermer et ouvrir lesdits premier et deuxième interrupteurs commandés d'un dispositif de charge respectivement selon un temps de conduction et un temps d'ouverture constants pendant une phase de charge,
- le dispositif de commande est configuré pour commander respectivement les dispositifs de charge aux bornes d'étages d'accumulateurs à charger, de façon décalée dans le temps,
- ladite batterie comporte au moins un module élémentaire, ledit au moins un module élémentaire comprenant une pluralité d'étages d'accumulateurs en série, et ledit système comporte en outre un dispositif de charge supplémentaire aux bornes dudit au moins un module élémentaire,
- ladite batterie comporte une pluralité de modules élémentaires disposés en série et en ce que ledit système comporte un dispositif de charge supplémentaire aux bornes de chacun des modules d'un nombre prédéterminé de modules élémentaires,

- ladite au moins une inductance présente un enroulement auxiliaire pour charger une alimentation annexe,
- ledit système d'équilibrage comporte un dispositif de mesure de la tension de chaque accumulateur configuré pour transmettre une information de tension au dispositif de commande,
- les accumulateurs sont de type lithium-ion,
- la batterie comporte des super condensateurs.

L'invention concerne également un dispositif de charge d'un système d'équilibrage de charge tel que défini ci-dessus.

D'autres caractéristiques et avantages de l'invention apparaîtront plus clairement à la lecture de la description suivante, donnée à titre d'exemple illustratif et non limitatif, et des dessins annexés parmi lesquels :

- la figure 1 représente un schéma synoptique d'une batterie comportant une mise en série d'étages d'accumulateurs et un système d'équilibrage de charge de la batterie,
- la figure 2 illustre un schéma synoptique d'un exemple de réalisation d'un dispositif de charge du système d'équilibrage de la figure 1,
- la figure 3 représente un schéma synoptique de la batterie et du système d'équilibrage de la figure 1 avec un dispositif de charge de la figure 2,

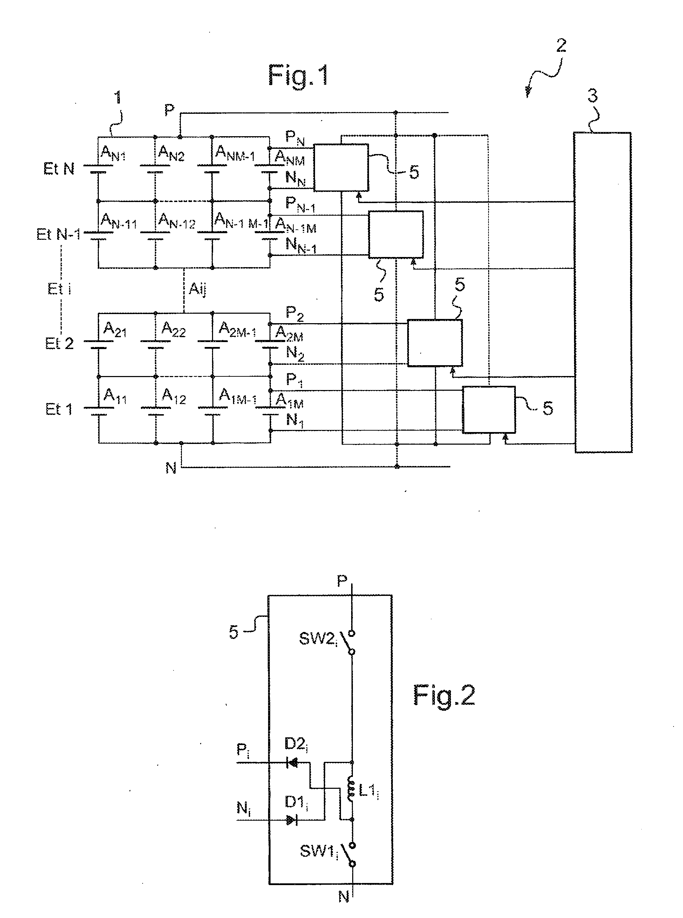

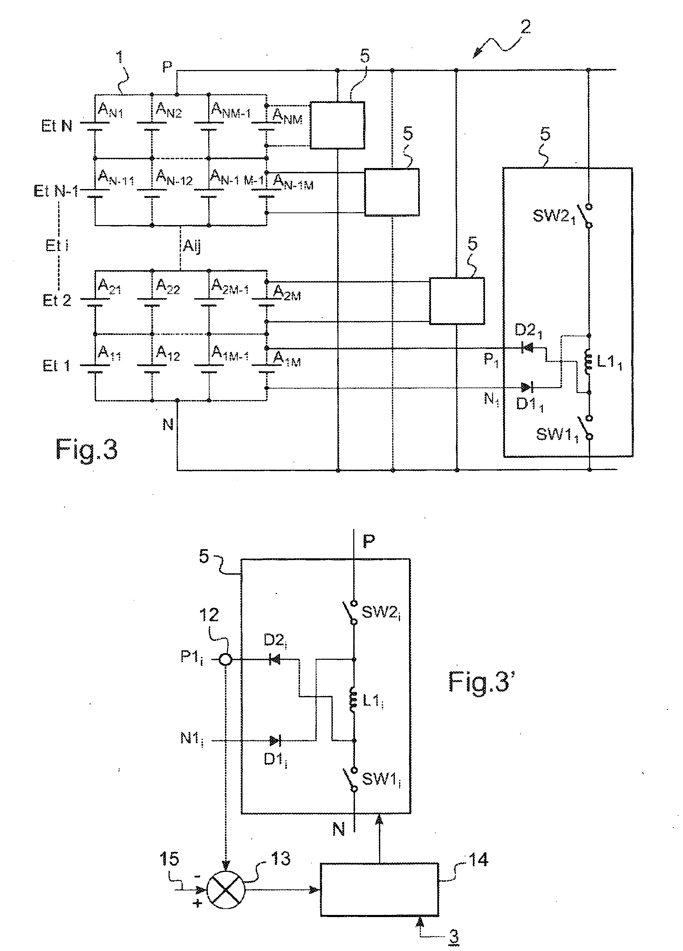

- la figure 3' illustre un schéma synoptique d'un exemple de réalisation d'un dispositif de charge du système d'équilibrage de la figure 1 en mode de conduction continue,

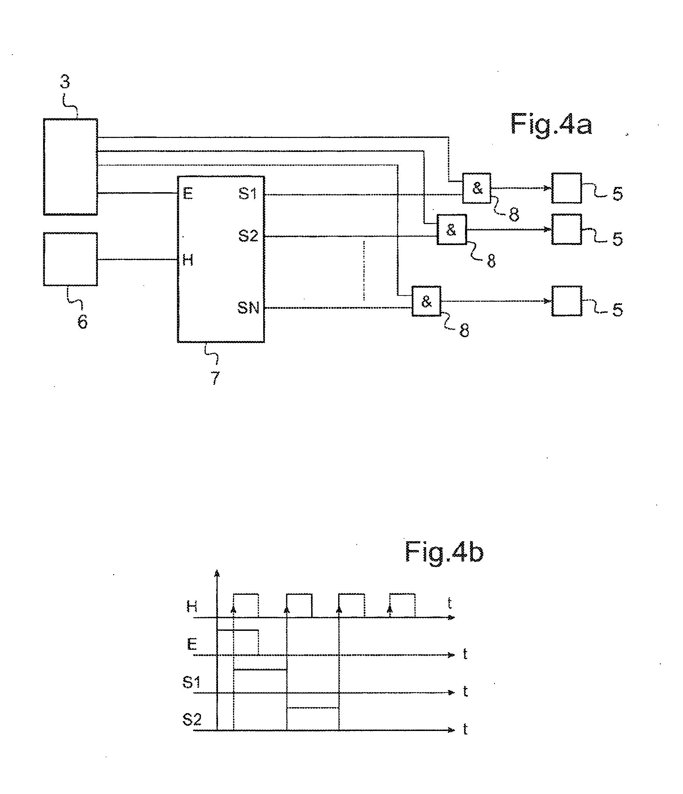

- la figure 4a est un organigramme illustrant de façon schématique un exemple de réalisation de la commande de dispositifs de charge du système d'équilibrage de la figure 1,
- la figure 4b est un diagramme associé à la figure 4a représentant de façon schématique les signaux de commande,

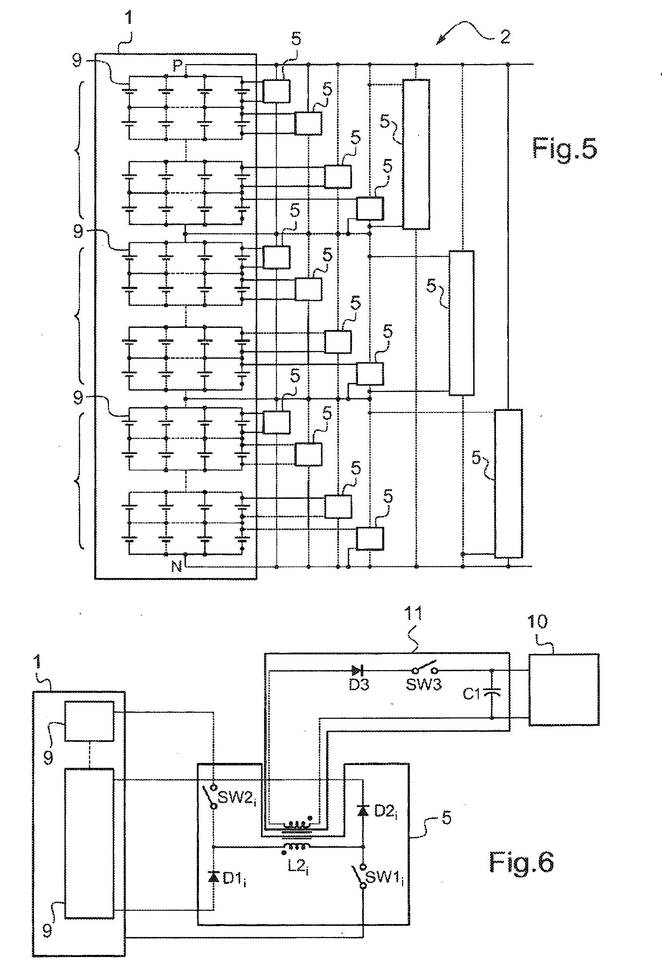

- la figure 5 représente un schéma synoptique d'une batterie comportant une pluralité de modules élémentaires mis en série comprenant chacun une mise en série d'un nombre prédéterminé d'étages d'accumulateurs, et un système d'équilibrage de charge de la batterie,
- la figure 6 représente de façon schématique un schéma synoptique d'un dispositif de charge couplé à un réseau auxiliaire à alimenter,

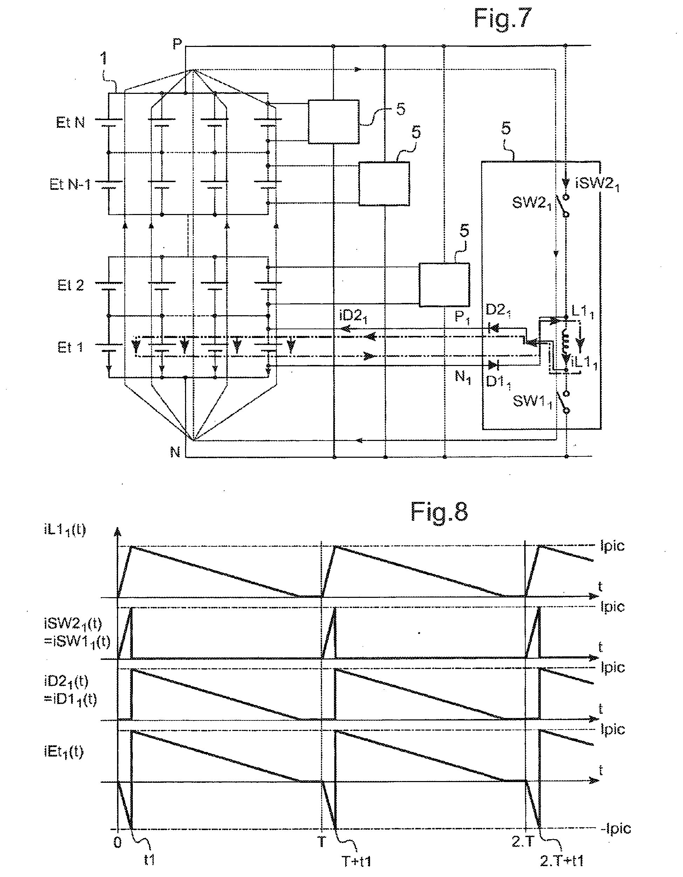

- la figure 7 illustre un schéma synoptique de la batterie et du système d'équilibrage de la figure 3, sur lequel on a indiqué l'évolution des différents courants lorsque les interrupteurs du dispositif de charge sont passants et lorsque les diodes du dispositif de charge sont passantes,
- la figure 8 est un diagramme illustrant l'évolution du courant en fonction du temps dans le dispositif de charge de la figure 2 et dans l'étage d'accumulateurs associé au dispositif de charge,

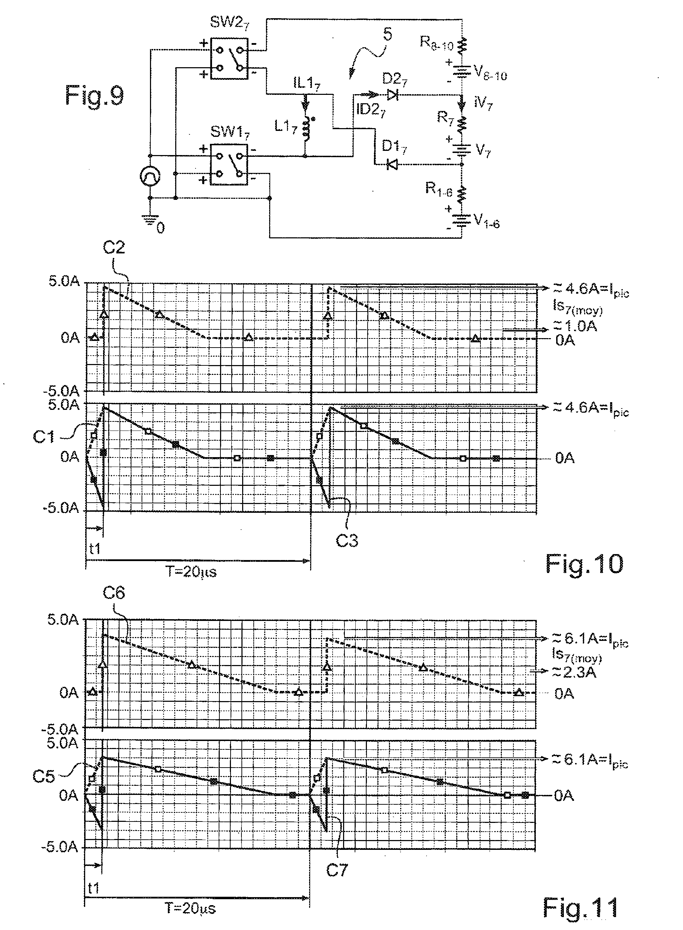

- la figure 9 illustre de façon schématique le fonctionnement d'un dispositif de charge selon une première simulation et une seconde simulation,
- la figure 10 illustre des courbes d'évolution du courant en fonction du temps pour la première simulation de la figure 9, et
- la figure 11 illustre des courbes d'évolution du courant en fonction du temps pour la seconde simulation de la figure 9.

Dans ces figures, les éléments sensiblement identiques portent les mêmes références.

La figure 1 représente une batterie 1 d'accumulateurs. Cette batterie 1 est composée de N étages, notés $Et_i$, connectés en série. Chaque étage $Et_i$ est composé d'un accumulateur ou de plusieurs accumulateurs $A_{ij}$ connectés en parallèle. L'indice i représente ici le numéro de l'étage, cet indice i varie dans l'exemple illustré sur la figure 1 de 1 à N, et l'indice j représente le numéro de chaque accumulateur dans un étage donné, cet indice j varie dans l'exemple illustré de 1 à M. Les bornes des accumulateurs $A_{ij}$ d'un même étage $Et_i$ sont raccordées ensemble par l'intermédiaire de connexions électriques, tout comme chaque étage $Et_i$ est également raccordé aux étages $Et_i$ adjacents par l'intermédiaire de connexions électriques.

## Système d'équilibrage de charge

L'invention a pour objet un système d'équilibrage 2 pour une telle batterie 1 d'accumulateurs, comprenant au moins deux étages d'accumulateurs $Et_i$ mis en série.

Ce système d'équilibrage 2 comporte un dispositif de commande 3, et une pluralité de dispositifs de charge 5 identiques par étage $Et_i$ d'accumulateur(s).

Chaque dispositif de charge 5 est connecté au pôle négatif, noté $N_i$, et au pôle positif, noté $P_i$, de chaque étage d'accumulateur(s) $Et_i$, et également au pôle positif, noté P, et au pôle négatif, noté N, de la batterie 1 d'accumulateurs. Les dispositifs de charge 5 sont commandés par le dispositif de commande 3.

Dans l'exemple illustré sur les figures 2 et 3, un dispositif de charge 5 associé à un étage $Et_i$ par exemple l'étage $Et_1$ sur la figure 3, comporte :

- une inductance $L1_i, L1_1$,
- une première diode $D1_i, D1_1$ dont l'anode et la cathode sont respectivement connectées au pôle $N_i, N_1$ d'un étage et à la première extrémité de l'inductance $L1_i, L1_1$,
- une seconde diode $D2_i, D2_1$ dont l'anode et la cathode sont respectivement connectées à la deuxième extrémité de l'inductance $L1_i.L1_1$, et au pôle $P1_i, P1_1$, du même étage,
- un premier interrupteur $SW1_i, SW1_1$ connecté à l'anode de la diode $D2_i, D2_1$ et la borne N de la batterie,
- un deuxième interrupteur $SW2_i, SW2_1$ connecté à la cathode de la diode $D1_i, D1_1$ et la borne P de la batterie.

Selon une alternative, on utilise deux interrupteurs commandés à la place des diodes $D1_i, D1_1$ et $D2_i.D2_1$. Un redressement dit de type synchrone est alors possible. Le rendement du circuit peut être augmenté grâce à la diminution de la chute de tension à l'état passant du composant.

Ce dispositif de charge 5 se différencie de l'état de l'art antérieur dans la mesure où il ne présente pas de référence commune entre l'entrée et la sortie, tel est le cas pour un montage de type « buck-boost », et dans la mesure où il n'utilise pas de transformateur, tel est le cas pour un montage de type « flyback ».

Une variante de réalisation consiste à ajouter une capacité connectée entre les pôles positif $P_i$ et négatif $N_i$ de chaque étage d'accumulateur(s). Le condensateur est configuré pour filtrer l'ondulation de courant issue du dispositif de charge 5. Un courant continu lissé est ainsi fourni à chaque étage d'accumulateur(s).

Il est possible aussi d'ajouter un condensateur (non représenté) entre les bornes N et P de la batterie. Il est configuré pour filtrer l'ondulation due au dispositif de charge 5. Ainsi le courant fourni par la batterie est lissé.

Le dispositif de charge 5 (figure 2) fonctionne aussi bien en régime de conduction continue que discontinue.

Le fonctionnement en régime de conduction discontinue est à privilégier car présente l'avantage d'être plus facile de mise en oeuvre et de se faire à moindre coût. En effet, en mode de conduction discontinue, le courant de l'inductance $L1_i$ s'annule par définition avant chaque période du signal de commande des interrupteurs $SW1_i$ et $SW2_i$. La valeur du courant traversant l'inductance $L1_i$, lorsque les deux interrupteurs $SW1_i$ et $SW2_i$ sont fermés, peut être déduite de la tension appliquée aux bornes de l'inductance $L1_i$, du temps de stockage d'énergie dans l'inductance $L1_i$ et de la valeur de cette dernière.

Ainsi, et contrairement au fonctionnement en mode de conduction continue (figure 3'), il n'est plus nécessaire de mettre en oeuvre un capteur de courant 12 associé à une boucle de régulation 13 et à une variable de référence de courant 15, ainsi qu'à un dispositif de contrôle du courant 14, par exemple un découpage en modulation de largeur d'impulsion par les transistors $SW1_i$ et $SW2_i$ fonctionnant en interrupteurs, pour chacun des étages d'accumulateurs $Et_i$ en série.

Par ailleurs, en mode de conduction discontinue, la commande des interrupteurs $SW1_i$ et $SW2_i$ en modulation de largeur d'impulsion peut être remplacée par une commande à temps de conduction fixe.

Selon un exemple de mode de réalisation de la commande des dispositifs de charge 5 par le dispositif de commande 3, on utilise une horloge unique 6, un registre à décalage 7 et des interrupteurs commandés ou de fonctions logiques « ET » 8 (figures 4a,4b).

Le registre à décalage 7 évite que les interrupteurs $SW1_i$ et $SW2_i$ des différents dispositifs de charge 5 des différents étages $Et_i$ soient fermés simultanément, ce qui aurait pour conséquence un courant de décharge trop important. Le signal d'entrée $\underline{E}$ du registre à décalage 7 est fourni par le dispositif de commande 3. Ce dernier commande également une des deux entrées de chaque fonction logique « ET » 8. La deuxième entrée de chaque fonction logique « ET » est connectée à une sortie du registre à décalage 7. La commande d'un dispositif de charge 5 est effective lorsque les deux entrées de la fonction logique « ET » 8 sont à l'état haut.

Cette commande permet de minimiser le courant instantané consommé par le circuit de commande à l'inverse d'une commande pour laquelle tous les dispositifs de charge 5 sont commandés en même temps. De plus, cette commande permet de réduire le courant efficace fourni par la batterie 1 comparé à une commande synchronisée des dispositifs de charge 5 et donc de minimiser son échauffement.

Par ailleurs, en se référant à la figure 5, lorsqu'un nombre conséquent d'étages $Et_i$ d'accumulateur(s) en série est utilisé, comme c'est le cas pour les véhicules électriques avec environ cent accumulateurs en série par exemple, la batterie 1 peut être constituée d'une mise en série de modules élémentaires 9, chaque module élémentaire 9 comportant une mise en série d'un nombre prédéterminé d'étages d'accumulateurs $Et_i$. Une mise en série de dix à douze étages par module élémentaire 9 est un exemple.

Ainsi, la connexion des interrupteurs $SW1_i$ et $SW2_i$ des dispositifs de charge 5 est faite aux bornes de dix à douze étages $Et_i$. La tenue en tension des diodes et interrupteurs commandés est limitée, en fonction de la technologie de la batterie Li-ion, à environ 45 V - 60 V, qui est une valeur de tenue en tension standardisée dans le domaine du semi-conducteur. La maintenance d'un nombre conséquent de modules élémentaires 9, comme c'est le cas pour les véhicules électriques, est facilitée.

Selon une variante de réalisation, on utilise en plus des dispositifs de charge 5 par étages d'accumulateur(s) $Et_i$, des dispositifs de charge 5 identiques par mise en série de N étages $Et_i$ formant un module élémentaire 9. La figure 5 illustre à titre d'exemple cette variante pour une connexion des dispositifs de charge 5 aux bornes de N étages d'accumulateur(s) d'un module élémentaire 9 et pour une association série de trois modules élémentaires 9 soit trois fois N étages $Et_i$. Selon cette variante, la connexion des interrupteurs $SW1_i$ et $SW2_i$ des dispositifs de charge 5 aux bornes d'un module élémentaire 9, est faite aux bornes de la batterie 1. Cette variante permet de transférer de l'énergie entre les N étages adjacents, et donc entre les modules élémentaires 9 associés en série.

On peut également utiliser un ou plusieurs des dispositifs de charge 5 implémenté(s) aux bornes d'une mise en série de N étages pour fournir de l'énergie à un réseau auxiliaire 10, comme par exemple le 12 V pour les véhicules (figure 6). Un dispositif annexe 11 est alors couplé à un dispositif de charge 5. L'inductance de stockage du dispositif de charge 5 est remplacée dans ce cas par une inductance couplée $L2_i$. Le dispositif annexe 11 comporte une diode de redressement D3 et un condensateur de stockage C1, disposées au secondaire de l'inductance couplée L2 pour former une structure de type « flyback ». La fourniture d'énergie au réseau auxiliaire 10 est contrôlée par un interrupteur SW3 implémenté entre la diode de redressement D3 et le condensateur de stockage C1. Cet interrupteur SW3 est commandé par le dispositif de commande 3.

Par ailleurs, le système d'équilibrage 2 peut comporter un dispositif de mesure de tension (non représenté) pour mesurer la tension de chaque étage d'accumulateur $Et_i$ et pour transférer une information de tension au dispositif de commande 3 qui peut à partir de cette information de tension déterminer si un étage d'accumulateur $Et_i$ doit être chargé et commander en conséquence le dispositif de charge 5 associé lorsque c'est le cas.

**Fonctionnement du système d'équilibrage en conduction discontinue**

Le fonctionnement du système d'équilibrage 2 est décrit ci-après en référence aux figures 7 et 8.

Lorsque le dispositif de commande 3 commande un transfert d'énergie à un étage $Et_i$, l'étage $Et_1$ dans l'exemple illustré, les interrupteurs $SW1_1$ et $SW2_1$ du dispositif de charge 5 en parallèle de l'étage $Et_1$ correspondant sont fermés simultanément et pendant un temps de conduction t1. La circulation du courant pendant ce temps de conduction t1 est représentée de façon schématique en pointillé sur la figure 7.

L'inductance $L1_1$ emmagasine dès lors de l'énergie. Le courant $iL1_1$ à travers l'inductance $L1_1$ croît proportionnellement à la tension appliquée à ses bornes, égale à la tension des N étages (figure 8). Pendant cette période, les diodes $D1_1$ et $D2_1$ sont bloquées. La diode $D1_1$ voit à ses bornes une tension égale à la tension des étages situés en dessous de l'étage auquel elle est connectée moins la tension de la batterie. La diode $D2_1$ voit quant à elle à ses bornes une tension égale à la tension des étages situés au dessus de l'étage auquel elle est connectée moins la tension de la batterie. Au maximum, la tension en inverse vue par la diode $D1_1$ ou $D2_1$ est égale à la tension de la batterie d'accumulateurs.

Au bout du temps t1, les interrupteurs $SW1_1$ et $SW2_1$ s'ouvrent simultanément. Le courant $iL1_1$ dans l'inductance $L1_1$ atteint à cet instant une valeur pic Ipic, égale à la tension appliquée aux bornes de l'inductance lorsque les interrupteurs $SW1_1$ et $SW2_1$ sont fermés, multipliée par t1 et divisée par la valeur de l'inductance.

Au bout du temps t1 et jusqu'à la fin de la période de fonctionnement T du dispositif de charge 5, les interrupteurs $SW1_1$ et $SW2_1$ sont à l'état ouvert ; les diodes $D1_1$ et $D2_1$ sont passantes jusqu'à l'annulation du courant dans l'inductance $L1_1$. La circulation du courant pendant cette phase est représentée de façon schématique par alternance de deux pointillés et d'un tiret sur la figure 7. Le courant $iL1_1$ à travers l'inductance $L1_1$ décroît proportionnellement à la tension appliquée à ses bornes, égale à moins la tension de l'étage d'accumulateur(s) $Et_1$ moins la chute de tension des deux diodes $D1_1$ et $D2_1$ en série avec celui-ci (figures 7 et 8). L'interrupteur $SW1_1$ voit à ses bornes une tension égale à la tension des étages situés en dessous de l'étage auquel il est connecté, plus la tension de l'étage auquel il est connecté et plus la tension à l'état passant de la diode $D2_1$. L'interrupteur $SW2_1$ voit quant à lui à ses bornes une tension égale à la tension des étages situés au dessus de l'étage auquel il est connecté, plus la tension de l'étage $Et_1$ auquel il est connecté et plus la tension à l'état passant de la diode $D1_1$. Au maximum, la tension en direct vue par l'interrupteur $SW1_1$ ou $SW2_1$ est égale à la tension de la batterie 1 d'accumulateurs.

Le fonctionnement du dispositif de charge 5 est identique quel que soit l'étage d'accumulateur $Et_i$ auquel il est connecté et permet donc de poursuivre la charge de certains étages.

**Dimensionnement**

**Mise en équations**

Le dimensionnement du dispositif de charge 5 de la figure 2 découle de la mise en équations de son fonctionnement décrit précédemment. La mise en équations ci-dessous est généralisée. Pour cela, les tensions d'entrée et de sortie sont respectivement appelées Ve et Vs. Ve représente la tension entre les bornes négative N et positive P de la batterie 1. La tension Vs représente la tension entre les bornes négative Ni et positive $P_i$ d'un étage d'accumulateur(s) $Et_i$.

Lorsque les interrupteurs $SW1_i$ et $SW2_i$ d'un même dispositif de charge 5 sont fermés pendant un temps de conduction t1, le courant croît dans l'inductance $L1_i$ ($iL1_i$). En négligeant la chute de tension à l'état passant des interrupteurs, le courant $iL1_i(t)$ dans l'inductance $L1_i$ s'écrit :

$$iL1_i(t) = \frac{Ve}{L1_i} \times t \qquad \text{(équation 1)}$$

Au bout du temps t1, les interrupteurs $SW1_i$ et $SW2_i$ s'ouvrent et le courant dans l'inductance $iL1_i$ atteint la valeur pic Ipic :

$$iL1_i(t1) = Ipic = \frac{Ve}{L1_i} \times t1 \qquad \text{(équation 2)}$$

Au bout du temps t1 jusqu'à ce que le courant $iL1_i$ s'annule, les diodes $D1_i$ et $D2_i$ d'un même dispositif de charge 5 conduisent. Le courant $iL1_i$ dans l'inductance $L1_i$ décroît suivant la loi suivante, avec Vd la chute de tension à l'état passant de la diode.

$$iL1_i(t) = -\frac{Vs + 2 \times Vd}{L1_i} \times t + Ipic \qquad \text{(équation 3)}$$

La phase de fonctionnement correspondant à un courant nul, lorsque les diodes sont bloquées, jusqu'à la fin de la période T définit le mode de conduction discontinue.

A partir des équations 2 et 3, le temps de conduction t1 à ne pas dépasser ($t1_{(max)}$) pour que le dispositif de charge 5 fonctionne en conduction discontinue peut être défini. Ce temps est déterminé en considérant que le courant dans l'inductance s'annule en T. Pour considérer le pire cas, le temps $t1_{(max)}$ est à évaluer pour la tension d'entrée Ve maximale et la tension de sortie Vs minimale. De plus, les chutes de tension des diodes peuvent être négligées pour considérer le pire cas.

$$t1_{(max)} = T \times \frac{1}{\dfrac{Ve}{Vs + 2 \times Vd} + 1} \qquad \text{(équation 4)}$$

Le courant de sortie du dispositif de charge 5 est égal au courant conduit par les diodes $D1_i$ et $D2_i$. Le courant moyen de sortie d'un dispositif de charge 5 est calculé à partir de l'équation 5. Le courant moyen de sortie ($Is_{(moy)}$) est proportionnel au carré de la tension d'entrée $Ve^2$ et inversement proportionnel à la tension de sortie Vs et à la chute de tension des diodes $D1_i$ et $D2_i$. Pour fournir le courant moyen désiré quelle que soit la tension de l'étage d'accumulateurs $Et_i$, la tension de sortie maximale et la tension d'entrée minimale doivent être prises en compte.

$$Is_{(moy)} = \frac{1}{2} \times \frac{1}{T} \times \frac{Ve^2 \times t1^2}{(Vs + 2 \times Vd) \times L1_i} \qquad \text{(équation 5)}$$

Le courant dans le ou les étages chargés n'est pas égal au courant de sortie du dispositif de charge 5. En effet, l'énergie emmagasinée par l'inductance $L1_i$ d'un dispositif de charge 5 est fournie par la batterie 1 d'accumulateur(s). Ce courant est donc fourni par le ou les étages qui sont chargés. Le courant fourni à l'étage ou aux étages d'accumulateur (s) chargés est donc égale à la somme algébrique entre moins le courant à travers les interrupteurs $SW1_i$ et $SW2_i$ plus le courant conduit par les diodes $D1_i$ et $D2_i$. En considérant N, le nombre de dispositifs de charge 5 en fonctionnement, la valeur moyenne du courant de l'étage ou des étages ($IEt_{(moy)}$) chargés est obtenu à l'aide de l'équation 6. Pour l'équation 6 ci-dessous, on considère que sur la même période de fonctionnement T, le courant est fourni par la batterie 1 aux dispositifs de charge 5 et également des dispositifs de charge 5 aux étages $Et_i$. Si le nombre de dispositifs de charge 5 en fonctionnement est égal au nombre d'étages $Et_i$ connectés à l'entrée des dispositifs de charge 5, le courant moyen des étages est égale à 0.

$$IEt_{(moy)} = \frac{1}{2} \times \frac{1}{T} \times Ipic \times (\frac{Ipic \times L1_i}{Vs + 2 \times Vd} - t1 \times N) \qquad \text{(équation 6)}$$

**Exemples**

Pour illustrer les équations introduites précédemment, le dimensionnement de deux dispositifs de charge 5 est considéré.

Le premier concerne un dispositif de charge 5 qui permet de poursuivre la charge d'un étage $Et_i$ et qui est connecté aux bornes de dix étages.

Le second concerne un dispositif de charge 5 qui permet de poursuivre la charge d'une association série de dix étages et qui est connecté aux bornes de cent étages, c'est-à-dire aux bornes de dix associations séries, chacune composés donc de dix étages en série.

Le dimensionnement du dispositif de charge 5 est divisé en 2 étapes, à savoir tout d'abord, le calcul du temps t1 de conduction des interrupteurs $SW1_i$ et $SW2_i$ pour un fonctionnement du dispositif de charge 5 en conduction discontinue (équation 4), puis, le calcul de la valeur $L1_i$ pour fournir en sortie du dispositif de charge le courant moyen désiré (équation 5).

Les hypothèses pour le dimensionnement des deux dispositifs de charge 5 sont les suivantes :

- courant moyen de sortie (minimum, $Is_{(moy)}$): 1 A
- fréquence de fonctionnement (F) : 50 kHz, soit T = 1/F = 20 $\mu$s
- tension d'un accumulateur (Li-ion à base de phosphate de fer) :

  • tension minimale : 2.5 V
  • tension maximale : 3.6 V
    chute de tension à l'état passant des diodes (Vd) :
  • diode rapide (type Schottky) : 0.3 V - 0.7 V
  • diode bipolaire : 0.6 V - 1.0 V

Pour les deux dispositifs de charge 5, le temps $t1_{(max)}$ est calculé en utilisant la chute de tension minimale des diodes $D1_i$ et $D2_i$, la tension maximale d'entrée et minimale de sortie du dispositif de charge. Puis l'inductance $L1_i$ maximale est calculée quant à elle en utilisant la chute de tension maximale des diodes et la tension minimale d'entrée et maximale de sortie du dispositif de charge 5.

Pour un dispositif de charge 5 permettant de charger un étage $Et_i$, le temps t1 et l'inductance $L1_i$ sont donnés ci-dessous (résultat 1). Des diodes rapides de type Schottky sont prises en compte.

$$t1_{(max)} = T \times \frac{1}{\frac{Ve}{Vs + 2 \times Vd} + 1} = \frac{1}{50 \times 10^3} \times \frac{1}{\frac{3.6 \times 9 + 2.5}{2.5 + 2 \times 0.3} + 1} = 1.631 \ \mu s$$

$$L1_i = \frac{1}{2} \times \frac{1}{T} \times \frac{Ve^2 \times t1^2}{(Vs + 2 \times Vd) \times Is_{(moy)}}$$

$$= \frac{1}{2} \times 50 \times 10^3 \times \frac{(2.5 \times 9 + 3.6)^2 \times (1.631 \times 10^{-6})^2}{(3.6 + 2 \times 0.7) \times 1} = 9.1 \ \mu H$$

(Résultat 1)

Pour un dispositif de charge 5 permettant de charger une association série de dix étages, le temps t1 et l'inductance $L1_i$ sont donnés ci-dessous. Des diodes bipolaires sont prises en compte.

$$tl_{(max)} = T \times \frac{1}{\dfrac{Ve}{Vs+2\times Vd}+1} = \frac{1}{50\times10^3} \times \frac{1}{\dfrac{3.6\times10\times9+2.5\times9+3.6}{2.5\times9+3.6+2\times0.6}+1} = 1.447\,\mu s$$

$$Ll_i = \frac{1}{2} \times \frac{1}{T} \times \frac{Ve^2 \times tl^2}{(Vs+2\times Vd)\times Is_{(moy)}}$$

$$= \frac{1}{2} \times 50\times10^3 \times \frac{(2.5\times10\times9+3.6\times9+2.5)^2 \times (1.447\times10^{-6})^2}{(3.6\times9+2.5+2\times1)\times1} = 96\,\mu H$$

(Résultat 2)

Dans ces exemples, L1 est une valeur maximale. On peut cependant pour des raisons de robustesse du système, utiliser des inductances de valeurs plus faibles.

**Simulations**

A titre d'exemple, deux résultats de simulation sont illustrés pour un dispositif de charge en fonctionnement permettant de charger un étage (figure 9).

La batterie 1 d'accumulateurs est composée dans cet exemple d'une association série de dix étages d'accumulateurs comprenant chacun un accumulateur. Un accumulateur est représenté par une source de tension Vi et une résistance Ri interne en série, égale à 0.010 ohms par accumulateur. Pour une question de lisibilité du schéma, les accumulateurs au dessus et en dessous de l'accumulateur en charge sont associés pour comporter une seule source de tension et une résistance série chacun.

La fréquence de fonctionnement du dispositif de charge 5 est fixée arbitrairement à 50 kHz.

Le temps de conduction des interrupteurs $SW1_i$ et $SW2_i$ est fixé à 1.631 $\mu s$. La valeur de l'inductance $L1_i$ est fixée à 9.1 $\mu H$ (cf. résultat 1).

**Première simulation**

Pour la première simulation, les accumulateurs sont chargés pour la majorité à la tension de seuil de 2.5 V et pour un seul accumulateur à la tension $V_7$ de 3.6 V. Le dispositif de charge 5 est connecté en parallèle de l'accumulateur qui présente la tension de charge la plus élevée, soit 3.6 V (ici le septième). Les étages en dessous du septième accumulateur sont associés à une source de tension $V_{1-6}$ de 15V et une résistance interne $R_{1-6}$ de 0.060 ohms, de même les étages au dessus du septième accumulateur sont associés à une source de tension $V_{8-10}$ de 7.5 V et une résistance interne $R_{8-10}$ de 0.030 ohms.

Cet exemple illustre le cas extrême de fonctionnement pour lequel le courant moyen de sortie doit être de 1 A (courant moyen minimum).

La figure 10 présente le résultat de simulation où l'on peut visualiser le courant à travers l'inductance ($iL1_7$) sur la courbe C1, le courant de sortie à travers la diode $D2_7$ ($iD2_7$) sur la courbe C2, et le courant à travers l'accumulateur $V_7$ ($iV_7$) sur la courbe C3.

Comme décrit précédemment, le courant $iL1_7$ croît dans l'inductance $L1_7$ pendant un temps de conduction t1, temps pendant lequel les interrupteurs $SW1_7$ et $SW2_7$ sont fermés. Il est intéressant de noter que pendant cette phase le courant est fourni par la batterie 1 d'accumulateurs, par l'intermédiaire du courant $iV_7$ fourni par l'accumulateur pendant cette phase. Au bout du temps t1, la valeur du courant atteint une valeur pic Ipic, de l'ordre de 4.6 A dans notre exemple. À partir du temps t1, le courant dans l'inductance décroît et est fourni à l'accumulateur. Le montage fonctionne en mode de conduction discontinue car le courant s'annule avant chaque période de fonctionnement du dispositif de charge 5.

Le courant moyen de sortie $Is_{7(moy)}$ est égale à 1.0 A, comme désiré. Un courant moyen minimum de 1 A est bien respecté quelles que soient la valeur de tension de l'accumulateur chargé et la valeur de tension de la batterie d'accumulateurs.

**Deuxième simulation**

Pour la deuxième simulation, les accumulateurs sont chargés pour la majorité à la tension de seuil de 3.6 V et pour un seul accumulateur à la tension de 2.5 V. Le dispositif de charge 5 est connecté en parallèle de l'accumulateur qui présente la tension de charge la plus faible, soit 2.5 V. Cet exemple illustre le cas extrême de fonctionnement pour lequel le dispositif de charge 5 doit fonctionner en mode de conduction discontinue.

La figure 11 présente le résultat de simulation où l'on peut visualiser le courant $IL1_7$ à travers l'inductance $L1_7$ sur la courbe C5, le courant de sortie $iD2_7$ à travers la diode $D2_7$ sur la courbe C6, et le courant à travers l'accumulateur $iV_7$ sur la courbe C7.

Comme décrit précédemment, le courant $iL1_7$ croît dans l'inductance $L1_7$ pendant un temps de conduction t1, temps pendant lequel les interrupteurs $SW1_7$ et $SW2_7$ sont fermés. Au bout du temps t1, la valeur du courant atteint une valeur pic Ipic, de l'ordre de 6.1 A dans notre exemple. À partir du temps t1, le courant dans l'inductance décroît et est fourni à l'accumulateur. Le montage fonctionne en mode de conduction discontinue car le courant s'annule avant chaque période de fonctionnement du dispositif de charge 5. Le fonctionnement en conduction discontinue est bien respecté quelles que soient la valeur de tension de l'accumulateur chargé et la valeur de tension de la batterie d'accumulateurs.

Le courant moyen de sortie $Is_{7(moy)}$ est égal à 2.3 A. Il est bien supérieur à la valeur minimum de 1 A.

D'autres simulations ont été mises en oeuvre. Le dispositif de charge 5 a été validé pour l'ensemble de la plage de variation de tension de l'accumulateur (2.5 V-3.6 V) et de la batterie 1 (25 V - 36 V). Le dispositif de charge 5 a été également validé quelle que soit la position de ce dernier, à savoir aux bornes de l'étage 1, de l'étage 6 ou de l'étage N. Le fonctionnement du dispositif de charge 5 avec plusieurs dispositifs de charge 5 fonctionnant en parallèle a été également validé. Le dispositif de charge 5 permettant de charger dix étages $Et_i$ en série et connecté aux bornes de cent étages $Et_i$ a également été validé selon cette démarche.

**Revendications**

1. Système d'équilibrage de charge pour batterie comprenant au moins deux étages ($Et_i$) d'accumulateurs mis en série, chaque étage ($Et_i$) comprenant un accumulateur ($A_{ij}$) ou au moins deux accumulateurs ($A_{ij}$) connectés en parallèle, **caractérisé en ce que** ledit système comporte :

   - pour chaque étage d'accumulateurs ($Et_i$) un dispositif de charge (5) associé comprenant :

     • au moins une inductance ($L1_i, L2_i$), pour emmagasiner de l'énergie,
     • au moins une première ($D1_i$) et au moins une seconde ($D2_i$) diodes, telles que ladite première diode ($D1_i$) soit reliée au pôle négatif ($N_i$) dudit étage d'accumulateur ($Et_i$) par son anode et par sa cathode à l'une des deux extrémités de l'inductance ($L1_i$), et ladite seconde diode ($D2_i$) soit reliée au pôle positif ($P_i$) dudit étage d'accumulateur ($Et_i$) par sa cathode et à l'autre extrémité de l'inductance ($L1_i, L2_i$) par son anode,
     • au moins un premier ($SW1_i$) et au moins un deuxième ($SW2_i$) interrupteurs commandés, tels que ledit premier interrupteur ($SW1_i$) soit relié au pôle négatif (N) de la batterie (1) et à l'anode de la seconde diode ($D2_i$), et que ledit deuxième interrupteur commandé ($SW2_i$) soit relié au pôle positif (P) de la batterie (1) et à la cathode de la première diode ($D1_i$), et **en ce que** ledit système comporte en outre

     - un dispositif de commande (3) desdits dispositifs de charge (5), configuré pour fermer lesdits interrupteurs ($SW1_i, SW2_i$) d'un dispositif de charge (5) associé à un étage d'accumulateurs ($Et_i$) à charger de façon à ce que ladite au moins une inductance ($L1_i, L2_i$) emmagasine de l'énergie et pour ouvrir lesdits interrupteurs commandés ($SW1_i, SW2_i$) de façon à transférer l'énergie à l'étage d'accumulateurs associé ($Et_i$).

2. Système d'équilibrage pour batterie selon la revendication 1, **caractérisé en ce que** le dispositif de commande (3) est configuré pour fermer simultanément lesdits premier ($SW1_i$) et deuxième ($SW2_i$) interrupteurs commandés d'un même dispositif de charge (5) à charger.

3. Système d'équilibrage pour batterie selon l'une des revendications 1 ou 2, **caractérisé en ce que** le dispositif de commande (3) est configuré pour ouvrir lesdits interrupteurs commandés au bout d'un temps de conduction prédéfini (t1).

4. Système d'équilibrage pour batterie selon l'une quelconque des revendications précédentes, **caractérisé en ce que** ledit dispositif de charge (5) est configuré pour fonctionner en conduction discontinue, indépendamment des niveaux de tensions de l'étage ($Et_i$) d'accumulateurs associé et de la batterie (1) pendant une phase de charge.

5. Système d'équilibrage pour batterie selon la revendication 3 prise en combinaison avec la revendication 4, **caractérisé en ce que** le temps de conduction prédéfini (t1) est calculé de sorte que le dispositif de charge (5) pour chaque étage ($Et_i$) d'accumulateur fonctionne en conduction discontinue.

**6.** Système d'équilibrage pour batterie selon l'une des revendications 4 ou 5, **caractérisé en ce que** ledit dispositif de commande (3) est configuré pour fermer et ouvrir lesdits premier (SW1$_i$) et deuxième (SW2$_i$) interrupteurs commandés d'un dispositif de charge (5) respectivement selon un temps de conduction (t1) et un temps d'ouverture (T-t1) constants pendant une phase de charge.

**7.** Système d'équilibrage pour batterie selon l'une quelconque des revendications précédentes, **caractérisé en ce que** le dispositif de commande (3) est configuré pour commander respectivement les dispositifs de charge (5) aux bornes d'étages (Et$_i$) d'accumulateurs à charger, de façon décalée dans le temps.

**8.** Système d'équilibrage de batterie selon l'une quelconque des revendications précédentes, ladite batterie (1) comportant au moins un module élémentaire (9), ledit au moins un module élémentaire (9) comprenant une pluralité d'étages d'accumulateurs (Et$_i$) en série, **caractérisé en ce que** ledit système comporte en outre un dispositif de charge (5) supplémentaire aux bornes dudit au moins un module élémentaire (9).

**9.** Système d'équilibrage pour batterie selon la revendication 8, **caractérisé en ce que** ladite batterie (1) comporte une pluralité de modules élémentaires (9) disposés en série et **en ce que** ledit système comporte un dispositif de charge supplémentaire (5) aux bornes de chacun des modules d'un nombre prédéterminé de modules élémentaires (9).

**10.** Système d'équilibrage pour batterie selon l'une quelconque des revendications précédentes, **caractérisé en ce que** ladite au moins une inductance (L2$_i$) présente un enroulement auxiliaire pour charger une alimentation annexe.

**11.** Système d'équilibrage pour batterie selon l'une quelconque des revendications précédentes, **caractérisé en ce qu'**il comporte un dispositif de mesure de la tension de chaque accumulateur configuré pour transmettre une information de tension au dispositif de commande (3).

**12.** Système d'équilibrage pour batterie selon l'une quelconque des revendications précédentes, **caractérisé en ce que** les accumulateurs sont de type lithium-ion.

**13.** Système d'équilibrage pour batterie selon l'une quelconque des revendications précédentes, **caractérisé en ce que** la batterie comporte des super condensateurs.

**14.** Dispositif de charge pour étage d'accumulateurs de batterie, d'un système d'équilibrage selon l'une quelconque des revendications précédentes.

**Patentansprüche**

**1.** Ladungsausgleichssystem für Batterien, umfassend mindestens zwei Stufen (Et$_i$) von in Reihe geschalteten Akkumulatoren, wobei jede Stufe (Et$_i$) einen Akkumulator (A$_{ij}$) oder mindestens zwei parallel geschaltete Akkumulatoren (A$_{ij}$) umfasst, **dadurch gekennzeichnet, dass** das System Folgendes umfasst:

- für jede Akkumulatorstufe (Et$_i$) eine zugeordnete Ladevorrichtung (5), die Folgendes umfasst:

• mindestens eine Drosselspule (L1$_i$, L2$_i$) zum Speichern von Energie,
• mindestens eine erste (D1$_i$) und mindestens eine zweite (D2$_i$) Diode, so dass die erste Diode (D1$_i$) über ihre Anode mit dem negativen Pol (N$_i$) der Akkumulatorstufe (Et$_i$) und über ihre Kathode mit einem der beiden Enden der Drosselspule (L1$_i$) verbunden ist, und die zweite Diode (D2$_i$) über ihre Kathode mit dem positiven Pol (P$_i$) der Akkumulatorstufe (Et$_i$) und über ihre Anode mit dem anderen Ende der Drosselspule (L1$_i$, L2$_i$) verbunden ist,
• mindestens einen ersten (SW1$_i$) und mindestens einen zweiten (SW2$_i$) gesteuerten Schalter, so dass der erste Schalter (SW1$_i$) mit dem negativen Pol (N) der Batterie (1) und mit der Anode der zweiten Diode (D2$_i$) verbunden ist, und dass der zweite gesteuerte Schalter (SW2$_i$) mit dem positiven Pol (P) der Batterie (1) und mit der Kathode der ersten Diode (D1$_i$) verbunden ist, und dass das System ferner Folgendes umfasst:

- eine Vorrichtung (3) zum Steuern der Ladevorrichtungen (5), die konfiguriert ist, um die Schalter (SW1$_i$, SW2$_i$) einer Ladevorrichtung (5) zu schließen, die mit einer aufzuladenden Akkumulatorstufe (Et$_i$) verknüpft ist, so dass die mindestens eine Drosselspule (L1$_i$, L2$_i$) Energie speichert, und um die gesteuerten Schalter (SW1$_i$,

SW2$_i$) zu öffnen, um die Energie an die verknüpfte Akkumulatorstufe (Et$_i$) zu übertragen.

2. Ladungsausgleichssystem für Batterien nach Anspruch 1, **dadurch gekennzeichnet, dass** die Steuervorrichtung (3) konfiguriert ist, um die ersten (SW1$_i$) und zweiten (SW2$_i$) gesteuerten Schalter ein und derselben aufzuladenden Ladevorrichtung (5) gleichzeitig zu schließen.

3. Ladungsausgleichssystem für Batterien nach einem der Ansprüche 1 oder 2, **dadurch gekennzeichnet, dass** die Steuervorrichtung (3) konfiguriert ist, um die gesteuerten Schalter nach Ablauf einer vordefinierten Stromführungsdauer (t1) zu öffnen.

4. Ladungsausgleichssystem für Batterien nach einem der vorhergehenden Ansprüche, **dadurch gekennzeichnet, dass** die Ladevorrichtung (5) konfiguriert ist, um unter diskontinuierlicher Stromführung zu funktionieren, unabhängig von den Spannungspegeln der zugeordneten Akkumulatorstufe (Et$_i$) und der Batterie (1) während einer Ladephase.

5. Ladungsausgleichssystem für Batterien nach Anspruch 3 kombiniert mit Anspruch 4, **dadurch gekennzeichnet, dass** die vordefinierte Stromführungsdauer (t1) derart berechnet wird, dass die Ladevorrichtung (5) für jede Akkumulatorstufe (Et$_i$) unter diskontinuierlicher Stromführung funktioniert.

6. Ladungsausgleichssystem für Batterien nach einem der Ansprüche 4 oder 5, **dadurch gekennzeichnet, dass** die Steuervorrichtung (3) konfiguriert ist, um die ersten (SW1$_i$) und zweiten (SW2$_i$) gesteuerten Schalter einer Ladevorrichtung (5) jeweils gemäß einer konstanten Stromführungsdauer (t1) und einer konstanten Öffnungsdauer (T-t1) während einer Ladephase zu schließen und zu öffnen.

7. Ladungsausgleichssystem für Batterien nach einem der vorhergehenden Ansprüche, **dadurch gekennzeichnet, dass** die Steuervorrichtung (3) konfiguriert ist, um jeweils die Ladevorrichtungen (5) an den Klemmen der aufzuladenden Akkumulatorstufen (Et$_i$) zeitlich versetzt zu steuern.

8. Ladungsausgleichssystem für Batterien nach einem der vorhergehenden Ansprüche, wobei die Batterie (1) mindestens ein Elementarmodul (9) umfasst, wobei das mindestens eine Elementarmodul (9) eine Vielzahl von in Reihe geschalteten Akkumulatorstufen (Et$_i$) umfasst, **dadurch gekennzeichnet, dass** das System ferner eine zusätzliche Ladevorrichtung (5) an den Klemmen des mindestens einen Elementarmoduls (9) umfasst.

9. Ladungsausgleichssystem für Batterien nach Anspruch 8, **dadurch gekennzeichnet, dass** die Batterie (1) eine Vielzahl von Elementarmodulen (9) umfasst, die in Reihe angeordnet sind, und dass das System eine zusätzliche Ladevorrichtung (5) an den Klemmen jedes der Module einer vorbestimmten Anzahl von Elementarmodulen (9) umfasst.

10. Ladungsausgleichssystem für Batterien nach einem der vorhergehenden Ansprüche, **dadurch gekennzeichnet, dass** die mindestens eine Drosselspule (L2$_i$) eine Hilfswicklung aufweist, um eine Nebenversorgung aufzuladen.

11. Ladungsausgleichssystem für Batterien nach einem der vorhergehenden Ansprüche, **dadurch gekennzeichnet, dass** es eine Vorrichtung zum Messen der Spannung jedes Akkumulators umfasst, die konfiguriert ist, um eine Spannungsinformation an die Steuervorrichtung (3) zu übertragen.

12. Ladungsausgleichssystem für Batterien nach einem der vorhergehenden Ansprüche, **dadurch gekennzeichnet, dass** die Akkumulatoren von der Art Lithium-Ionen sind.

13. Ladungsausgleichssystem für Batterien nach einem der vorhergehenden Ansprüche, **dadurch gekennzeichnet, dass** die Batterie Superkondensatoren umfasst.

14. Ladevorrichtung für Batterie-Akkumulatorstufen eines Ausgleichssystems nach einem der vorhergehenden Ansprüche.

**Claims**

1. A charge equalizing system for batteries comprising at least two accumulator stages (Et$_i$) connected in series, each stage (Et$_i$) comprising an accumulator (A$_{ij}$) or at least two accumulators (A$_{ij}$) connected in parallel, **characterized**

**in that** said system comprises:

- for each accumulator stage ($Et_i$), an associated charging device (5) comprising:

• At least one inductance ($L1_i$, $L2_i$) for storing energy,
• At least one first ($D1_i$) and at least one second ($D2_i$) diodes, such that said first diode ($D1_i$) is linked to the negative pole ($N_i$) of said accumulator stage ($Et_i$) by its anode and by its cathode at one of the two ends of the inductance ($L1_i$) and said second diode ($D2_i$) is connected to the positive pole ($P_i$) of said accumulator stage ($Et_i$) by its cathode and at the other end of the inductance ($L1_i$, $L2_i$) by its anode,
• At least one first ($SW1_i$) and at least one second ($SW2_i$) controlled switches, such that said first switch ($SW1_i$) is linked to the negative pole (N) of the battery (1) and to the anode of the second diode ($D2_i$), and that said second controlled switch ($SW2_i$) is linked to the positive pole (P) of the battery (1) and to the cathode of the first diode ($D1_i$), and **in that** said system also comprises

- a control device (3) for controlling said charging devices (5), configured to close said switches ($SW1_i$, $SW2_i$) of a charging device (5) associated with a stage of accumulators ($Et_i$) to be charged such that said at least one inductance ($L1_i$, $L2_i$) stores energy, and to open said controlled switches ($SW1_i$, $SW2_i$) so as to transfer energy to the associated accumulator stage ($Et_i$).

2. The equalizing system for batteries according to claim 1, **characterized in that** the control device (3) is configured to simultaneously close said first ($SW1_i$) and second ($SW2_i$) controlled switches of a same charging device (5) to be charged.

3. The equalizing system for batteries according to one of claims 1 or 2, **characterized in that** the control device (3) is configured to open said controlled switches after a predefined conduction time (t1).

4. The equalizing system for batteries according to any one of the previous claims, **characterized in that** said charging device (5) is configured to operate in discontinuous conduction mode independently from the voltage levels of the associated accumulator stage ($Et_i$) and from the battery (1) during a charge phase.

5. The equalizing system for batteries according to claim 3 taken in combination with claim 4, **characterized in that** the predefined conduction time (t1) is calculated such that the charging device (5) for each accumulator stage ($Et_i$) operates in discontinuous conduction mode.

6. The equalizing system for batteries according to one of claims 4 or 5, **characterized in that** said control device (3) is configured to close and open said first ($SW1_i$) and second ($SW2_i$) controlled switches of a charging device (5) respectively according to a conduction time (t1) and an open time (T-t1) that are constant during a charge phase.

7. The equalizing system for batteries according to any one of the previous claims, **characterized in that** the control device (3) is configured to respectively control the charging devices (5) at the terminals of accumulator stages ($Et_i$) to be charged in a way that is staggered in time.

8. The equalizing system for batteries according to any one of the previous claims, said battery (1) comprising at least one elementary module (9), said at least one elementary module (9) comprising a plurality of accumulator stages ($Et_i$) in series, **characterized in that** said system also comprises an additional charging device (5) at the terminals of said at least one elementary module (9).

9. The equalizing system for batteries according to claim 8, **characterized in that** said battery (1) comprises a plurality of elementary modules (9) arranged in series, and **in that** said system comprises an additional charging device (5) at the terminals of each of a predetermined number of elementary modules (9).

10. The equalizing system for batteries according to any one of the previous claims, **characterized in that** said at least one inductance ($L2_i$) presents an auxiliary winding for charging an ancillary power supply.

11. The equalizing system for batteries according to any one of the previous claims, **characterized in that** the system comprises a device for measuring the voltage of each accumulator configured to transmit voltage information to the control device (3).

**12.** The equalizing system for batteries according to any one of the previous claims, **characterized in that** the accumulators are of the lithium-ion type.

**13.** The equalizing system for batteries according to any one of the previous claims, **characterized in that** the battery comprises supercapacitors.

**14.** A charging device for a battery accumulator stage of an equalizing system according to any one of the previous claims.

## Fig.1

## Fig.2

Fig.3

Fig.3'

# Fig.4a

# Fig.4b

Fig.5

Fig.6

## Fig.7

## Fig.8

19

Fig.9

Fig.10

Fig.11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008116850 A1
- US 5659237 A
- CN 1905259